# EUROPEAN PATENT APPLICATION

(11) **EP 2 116 898 A1**
(43) Date of publication of application: **11.11.2009**
(21) Application number: 07721523.4
(22) Date of filing: 21.06.2007
(51) Int. Cl.: G03D 17/00

(54) **DARK BOX**

(30) Priority: 06.02.2007 CN 200720139209 U
(71) Applicant: Personal Environment Control, 1332 Rixensart (BE)
(72) Inventor: Kenneth Hamilton Norton, Shenzhen, Guangdong 518026 (CN)
(74) Representative: De Groote, Christophe
(86) International application number: PCT/CN2007/001950
(87) International publication number: WO 2008/095354

(57) **Abstract**

A multifunction dark box includes a frame (5) and a casing (10) covering the frame (5). A light-blocking and internally highly light-reflective hermetical chamber is formed inside the casing (10).

## Description

### Field of the invention

The invention relates to a dark box and, more particularly, to a multifunctional dark box.

### Description of prior art

In the dark boxes of the prior art, since the level of light reflection is low, the light source is either leaked through the wall, or the light energy is absorbed by the face of the wall or the fabric and converted into useless heat, which cannot meet the darkness requirements of the dark box.

### Summary of the invention

An object of the present invention is to provide a dark box, which has a high light blocking performance, and strong internal light reflection, and is an effectively sealed dark box.

To achieve the above object, there is provided a dark box, comprising a body and a frame provided therein, wherein the outer surface of said frame is covered with a casing, so as to form in the casing a sealed chamber which is light-tight and intensively light-reflecting internally.

The frame has a rectangular parallelepipedic shape.

The frame is formed by connecting metal pipes, with right-angled connectors being sheathed on at the three dimensional right angles formed by said three metal pipes.

The right-angled connectors are three-way joints, wherein each two of the joints are disposed at an angle of 90 degrees with respect to each other, and connecting holes are provided within the joints, the diameter of the connecting holes being slightly larger than the cross-sectional diameter of the metal pipes and said metal pipes being just capable of being inserted into said connecting holes. There here are eight of said right-angled connectors.

The casing is a double-layer casing, with the outer layer being a light-tight material, and the inner layer being a light-reflecting material.

Said casing is provided with ventilation holes. There are three such ventilation holes, which are disposed in any three of the vertical rectangular faces of the casing.

Each ventilation hole is provided with a mesh face, behind which a closing layer of the same material as the inner and outer layers of the casing is provided for closing the ventilation hole. Alternatively, said closing layer can also be disposed outside the mesh face, with Velcro being provided on the closing layer, so as to stick to a Velcro provided on the casing.

Said casing is provided with four holes, with a first hole and a second hole of the same size and position being opened beside the ventilation holes in the corresponding two of the vertical rectangular faces of the casing for drawing in outside air, a third hole of a diameter smaller than that of the first hole being provided at the opposite end of the ventilation hole in any of the other of the vertical rectangular faces for the connection of electrical input, and a fourth hole being provided in the top transverse rectangular face for drawing out air from within the dark box, the diameter of the fourth hole being equal to that of the first and second holes.

Said first, second, third and fourth holes are respectively provided internally with a first stocking, with an end of the first stocking being connected within the hole, and a second stocking being provided outside the first stocking, and the other ends of the first and second stockings being provided respectively with a string for knotting or loosening the stocking.

The three connected rectangular faces of the casing are provided with zipper openings for the ease of assembly/disassembly of the whole dark box, with the zipper being provided with a water- and light-leakage-proof backing.

The dark box according to the present invention can be used in conjunction with a lighting system and a water extraction system for the soil-free cultivation of plants, such as for example vanilla/herbs, vegetables or fungi. It can also be used in conjunction with a lighting system to make the skin colour of people brown (i.e. for skin tanning), using the reflective conditions of the lighting within the dark box. It can furthermore be used in a reverse way from the designed functions for developing photographic films and photographs, i.e. as a light-tight design to ensure that no light enters into the dark box, thereby preventing the films or photographs from being damaged due to light transmission.

### Short description of the drawings

Fig. 1 is a perspective and schematic diagram of an embodiment of the present invention.
Fig. 2 is a perspective and schematic diagram of another face of an embodiment of the present invention.
Fig. 3 is a schematic diagram of the frame structure of an embodiment of the present invention.
Fig. 4 is a reference diagram of an embodiment of the present invention in an operational status.
Fig. 5 is a perspective schematic structural diagram of a right-angle connector of an embodiment of the present invention.
Fig. 6 is a cross-sectional view of a stocking of an embodiment of the present invention.
Fig. 7 is a structural diagram of a ventilation hole of an embodiment of the present invention

The figures are not drawn to scale. Generally, identical components are denoted by the same reference numerals in the figures.

### Detailed description of preferred embodiments

These and further aspects of the dark box according to the invention will be explained in greater detail by way of example and with reference to the accompanying drawings.

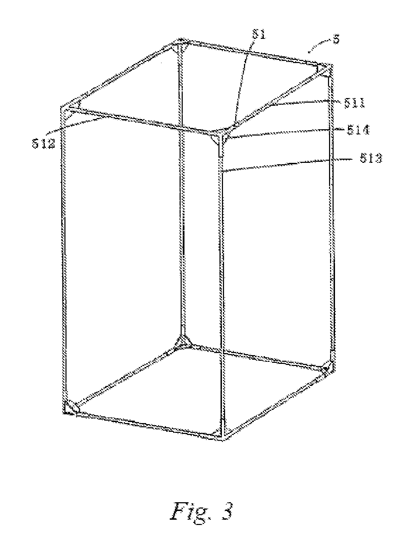

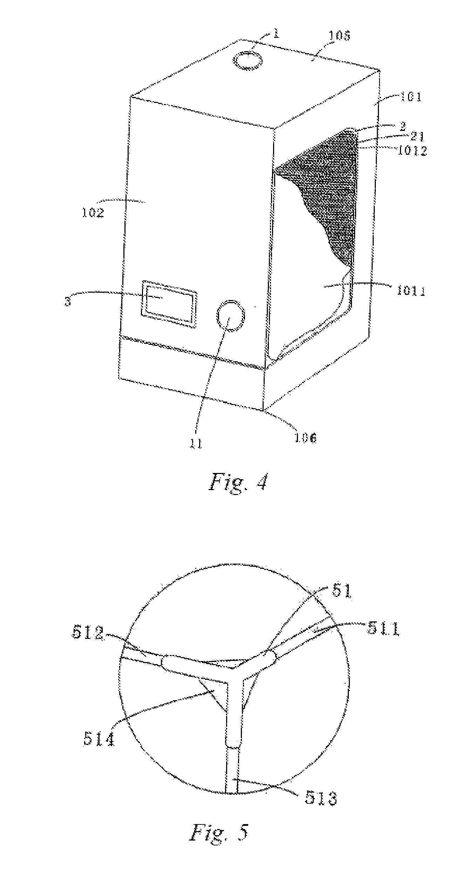

As shown in Figs 3 and 5, a frame 5 has a rectangular parallelepipedic shape, with each of the supporting bars being a metal pipe. A right-angled connector 51 is sheathed at the three dimensional right angles formed by three metal pipes, such as metal pipes 511, 512 and 513. The right-angled connector 51 is a three-way joint, with each two of the joints being at an angle of 90 degrees with respect to each other. An angle board 514 is disposed at each of the right angles to be complementary to the right-angled sides. Connecting holes are disposed on the connectors, with the diameter of the connecting holes being slightly larger than the cross-sectional diameter of the metal pipes, with the metal pipes just being able to be inserted into said connecting holes. The three metal pipes are sheathed respectively within the three joints of the right-angled connector 51. There are eight such right-angled connectors, which are disposed respectively at the eight corners of the frame.

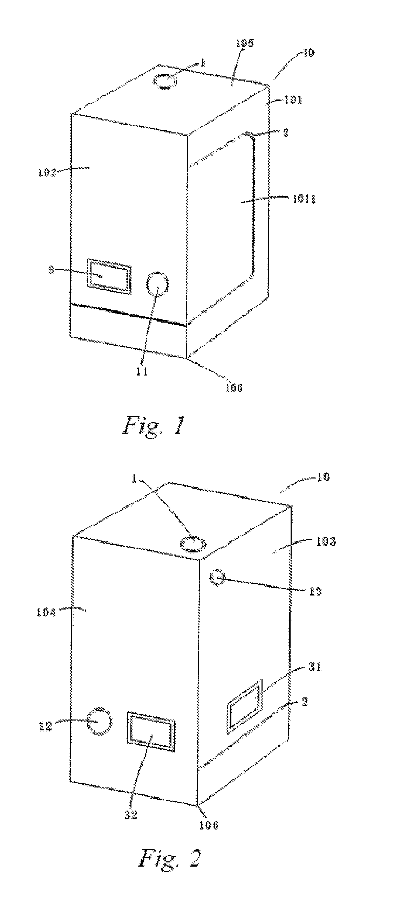

As shown in Figs 1, 2 and 4, the frame 5 is covered by a casing 10. Said casing 10 forms a light-tight sealed chamber. The casing 10 is a double-layer casing, with the outer layer being in a light-tight material, and the inner layer being in a light-reflective material. The casing 10 is divided in succession into vertical rectangular faces 101, 102, 103 and 104, and transverse faces 105 and 106, with ventilation holes provided respectively in the three vertical rectangular faces 102, 103 and 104 of the casing.

The ventilation holes 3, 31 and 32 allow outside air to flow into the dark box and the circulation of air within the dark box. The ventilation holes are in the shape of a rectangle. The ventilation holes 3 and 32 are disposed at the left side and close to the lower part of the respective vertical rectangular faces 102, 104, and the ventilation hole 31 is disposed in the middle and close to the lower part in the vertical rectangular face 103 and in the same horizontal plane as the ventilation hole 3.

Furthermore, four circular holes are provided in the surfaces of the casing. The first hole 11 and the second hole 12 are of the same size and are disposed beside the ventilation holes in the corresponding two of the vertical rectangular faces 102 and 104 of the casing. The third hole 13 has a diameter which is smaller than that of the first hole 11 and is disposed on the right side of the opposite end of the ventilation holes in another vertical rectangular face 103. The fourth hole 1 has a diameter which is equal to that of the first and second holes and is disposed in the transverse face 105 at a side close to the included angle of the vertical rectangular faces 103 and 104.

An opening is transversely disposed in one vertical rectangular face 101 of the casing, with a cover 1011 provided on the opening.

An opening zipper 2 is stitched on the opening and the cover 1011. The opening zipper 2 is transversely stitched along the rectangular face on the opening and the cover 1011, with one end of the zipper 2 being disposed on the same rectangular face 101, and the other end being extended to the corresponding rectangular face 103.

A backing 21 is provided within the zipper 2, which is provided on one side of the opening.

Zipper openings are disposed in the three connected rectangular faces of the casing of the dark box for the ease of assembly/disassembly of the whole dark box, with the zipper being provided with a water- and light-leakage-proof backing. The zipper openings are used for the ease of assembly/disassembly of the whole dark box when the whole zipper is unzipped/locked. In practice, it is only necessary to unzip the zipper on one of the rectangular faces. It will be appreciated that the arrangement of the zipper ensures the ease of assembly/disassembly of the dark box, and the same zipper can also be used in the opening/closing of the casing at normal times, i.e. unzipping the whole zipper for assembly/disassembly, and unzipping the zipper in one of the rectangular faces for normal use.

Canvas, which is strong, abrasion-resistant and tear-resistant, can be used as the material for the outer layer of the casing. The inner layer is a highly light-reflective material with a reflectivity of more than 85% when a light of a wavelength of 580 nm is incident on it in a normal way, which material is capable of functionally reflecting the light by several folds within the dark box, and at the same time enhancing the lumen of the lighting within the dark box. Both of the materials of the inner and outer layers of the casing are washable, so that bacteria and mildew can be eliminated.

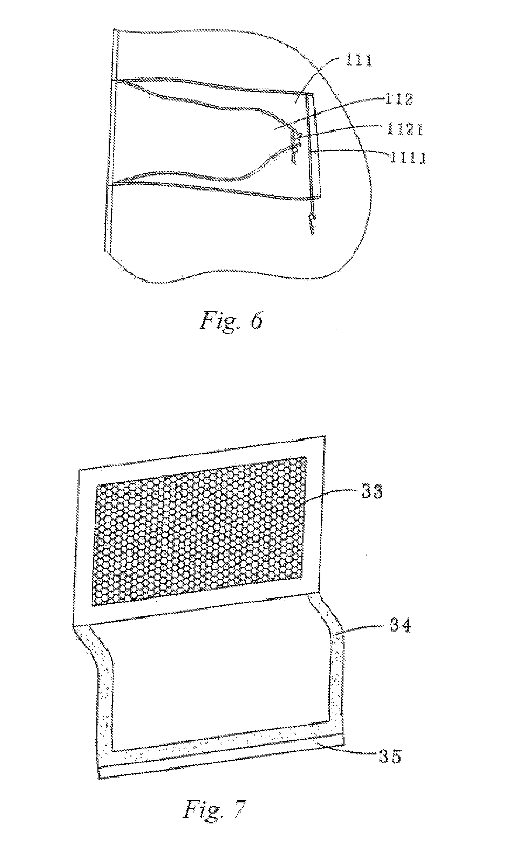

As shown in Fig. 6, the first, second, third and fourth holes are provided internally with a first stocking 112, respectively, with one end of the first stocking 112 being connected within the hole, and a second stocking 111 being provided outside the first stocking 112, and the other ends of the first and second stockings being provided respectively with a string 1121, 1111; the first and second stockings are two-layer materials, with the outer layer being a light-tight material, and the inner layer being coated with a light reflecting cloth.

As shown in Fig. 7, a mesh face 33 is provided on the ventilation holes, with a closing layer 35 for closing the ventilation hole being provided in the mesh face for the prevention of light leakage via the ventilation hole. Velcro 34 (hook surface/rough surface) is provided on the closing layer 35, for sticking onto the ventilation hole, which mesh face is made of mesh fabrics with mesh holes of 0.2 mm, such that insects are prevented from entering the dark box (the plants can be pollinated by insects at improper times, or can be damaged by destructive insects or by pathogens transmitted unintentionally or intentionally by them).

In use, unzip the zipper and open a zippered gate, place/fit the required apparatus (including lighting apparatus, watering apparatus, and air extracting apparatus), and then place the plants into the box (e.g. vanilla, vegetables, or fungi, etc.). If it is necessary to carry the dark box around, it requires only separation of the right-angled connectors of the frame from the metal pipes, detaching the metal pipes, folding the casing up and putting all the components inside a carry bag for carrying.

It will be understandable that in comparison with an enclosed box or an open box without internal reflection or with a lesser degree of internal reflection, the high reflection within the dark box of the present invention can produce substantially higher light intensity. In an open space, the light intensity is decreased due to the inversed law between the light source and the squared distance. However, when a high reflective material is used, it is possible that the above law is changed, since the internal reflection of light can occur many times on the reflective surfaces of the faces. The advantages of the present dark box over other similar products are that during plantation or cultivation, the plants can be irradiated with the same light intensity (lumen), further promoting the growth of the plants, and without requiring frequent adjustment of the distance between the light source and the plants.

The dark box according to the present invention can be used in conjunction with a lighting system (typically of a CFL or high-luminance discharge type) and a water extraction system for the soil-free cultivation of plants such as for example vanilla/herbs, vegetables or fungi, so it is specifically referred to as a soil-free cultivation dark box. It can also be used in conjunction with a lighting system (typically of a CFL or high-luminance discharge type) to make the colour of skin of people brown (i.e. skin-tanning), using the reflective conditions of the lighting system, so it is specifically also referred to as a UV chamber. Furthermore, use can be made in a reverse way from the designed function, i.e. the light-tight design, to ensure that no light enters into the dark box, thus preventing films or photographs from being damaged due to light transmission, here, being used in developing films and photographs.

It shall be understood that the applications of the present invention are not limited to the examples described hereinabove, and that it can be used in many other applications, without departing from the present invention, and which are not described in detail here.

## Claims

1. A dark box, comprising a body and a frame provided therein, **characterized in that** the outer surface of said frame is covered with a casing, so as to form in the casing a sealed chamber which is light-tight and intensively light-reflecting internally.

2. The dark box according to claim 1, **characterized in that** said frame has a rectangular parallelepiped shape.

3. The dark box according to claim 2, **characterized in that** said frame is formed by connecting metal pipes, with right-angled connectors being sheathed on at the three dimensional right angles formed by said three metal pipes.

4. The dark box according to claim 3, **characterized in that** there are eight of said right-angled connectors, and **in that** each said right-angled connector is a three-way joint, wherein each two of the joints are disposed at an angle of 90 degrees with respect to each other, and wherein connecting holes are provided within the joints, the diameter of the connecting holes being slightly larger than the cross-sectional diameter of the metal pipes and said metal pipes being just capable of being inserted into said connecting holes.

5. The dark box according to anyone of preceding claims, **characterized in that** said casing is a double-layer casing, with the outer layer being a light-tight material, and the inner layer being a light-reflecting material.

6. The dark box according to anyone of preceding claims, **characterized in that** said casing is provided with three ventilation holes which are respectively disposed in any three of the vertical rectangular faces of the casing.

7. The dark box according to claim 6, **characterized in that** each ventilation hole is provided with a mesh face, behind which a closing layer for closing the ventilation hole is provided, the closing layer being of the same material as the inner and outer layers of the casing, and said closing layer can also be disposed outside the mesh face, with Velcro being provided on the closing layer, so as to stick to the Velcro provided on the casing.

8. The dark box according to claim 7, **characterized in that** said casing is provided with four holes, with a first hole and a second hole of the same size and position being opened beside the ventilation holes in the corresponding two of the vertical rectangular faces of the casing for drawing in outside air, a third hole of a diameter smaller than that of the first hole being provided at the opposite end of the ventilation hole in any of the other of the vertical rectangular faces for the connection of electrical input, and a fourth hole being provided in the top transverse rectangular face for drawing out air from within the dark box, the diameter of the fourth hole being equal to that of the first and second holes.

9. The dark box according to claim 8, **characterized in that** said first, second, third and fourth holes are respectively provided internally with a first stocking, with an end of the first stocking being connected within the hole, and a second stocking being provided outside the first stocking, and the other ends of the first and second stockings being provided respectively with a string for knotting or loosening the stocking.

10. The dark box according to anyone of preceding claims, **characterized in that** three connected rectangular faces of said casing are provided with zipper openings for the ease of assembly/disassembly of the whole dark box, the zipper being provided with a water- and light-proof backing.
